# EUROPEAN PATENT SPECIFICATION

(11) **EP 3 855 016 B1**
(45) Date of publication and mention of the grant of the patent: **01.03.2023**
(21) Application number: 19863808.2
(22) Date of filing: 20.05.2019
(51) Int. Cl.: F03D 7/04, F03D 7/02

(54) **WIND FARM**
WINDPARK
PARC ÉOLIEN

(30) Priority: 20.09.2018 JP 2018175578
(43) Date of publication of application: 28.07.2021
(73) Proprietor: Hitachi, Ltd., Tokyo 100-8280 (JP)
(72) Inventor: OTAKE, Yusuke, Tokyo 100-8280 (JP); KONDOU, Shinichi, Tokyo 100-8280 (JP); KUSUNO, Nobuhiro, Tokyo 100-8280 (JP)
(74) Representative: Strehl Schübel-Hopf & Partner
(86) International application number: PCT/JP2019/019860
(87) International publication number: WO 2020/059207

(56) References cited:
- EP-A1- 1 890 034
- EP-A1- 3 037 657
- WO-A1-2015/136687
- WO-A1-2016/102154
- JP-A- 2018 059 455
- JP-A- 2018 135 772
- US-A1- 2011 187 106
- US-A1- 2013 166 082
- US-A1- 2014 234 103
- US-A1- 2018 100 486
- GEBRAAD P M O ET AL: "A data-driven model for wind plant power optimization by yaw control", 2015 AMERICAN CONTROL CONFERENCE (ACC), IEEE, 4 June 2014 (2014-06-04), pages 3128-3134, XP032621887, ISSN: 0743-1619, DOI: 10.1109/ACC.2014.6859118 [retrieved on 2014-07-17]

## Description

### Technical field

The present invention relates to a wind farm, in which a plurality of wind power generators are installed, and a wind power generator, and in particular, relates to a wind farm capable of improving a power generation amount of an entire wind farm and a wind power generator suited to be installed in the wind farm.

### Background Art

In a wind farm in which a plurality of wind power generators are installed to be adjacent to each other, wind called a wind turbine slipstream (simply referred to as a slipstream) that has passed through the wind power generator located on a windward side flows into the wind power generator on a leeward side. In such a wind turbine slipstream, there are drawbacks such as a decrease in the power generation amount of the wind power generator, an increase in damage degree of the wind power generator, and the like. In order to address such drawbacks, a method for controlling an inclination angle of a blade of the wind power generator located on the windward side, a method for controlling an orientation of a rotational plane of a rotor, and the like have been proposed.

For example, PTL 1 discloses a method for controlling the inclination angle (pitch angle) of the blade of the wind power generator located on the windward side, and describes, in a wind farm including a plurality of wind power generators (T1, Ti-1, Ti), a configuration for adjusting operation parameters of the wind power generators (T1, Ti-1, Ti) according to an optimization target during the operation of the wind farm. Then, PTL 1 discloses that the above optimization target is set to the maximum value of the total output of the wind farm formed from the sum of all the individual outputs (Pi) of the plurality of wind power generators (T1, Ti-1, Ti).

Further, PTL 2 describes a wind farm including a plurality of wind power generators each including at least a rotor that rotates by receiving the wind and a yaw angle controller for controlling the orientation of the rotational plane of the rotor, and a controller for determining a slipstream region based on wind direction data and information of the orientation of the rotational plane of the rotor of the wind power generator located on the windward side, and controlling the orientation of the rotational plane of the rotor of the wind power generator located on the windward side, based on the slipstream region that has been determined and position information of the wind power generator located on the leeward side.

### Citation List

### Patent Literature

PTL 1: JP 2010-526963 A
PTL 2: JP 2018-059455 A (also published as US 2018/ 100486 A1 forming the basis for the two-part form of present claim 1)

Other conventional wind farms are described in EP 3 037 657 A1 and EP 1 890 034 A1.

### Summary of Invention

### Technical Problem

In the wind farm described in PTL 1, however, it is necessary to newly introduce a network for aggregating information from all the wind power generators and a central processing unit for determining control parameters. This may lead to an increase in equipment cost. Further, in the wind farm described in PTL 2, although the damage degree of the wind power generator on the leeward side can be reduced depending on the wind direction, large yaw driving of the wind power generator on the windward side frequently occurs. This may lead to an increase in the damage degree, and may largely reduce the power generation amount of the wind power generator on the leeward side.

Therefore, the present invention provides a wind farm and a wind power generator capable of improving the power generation amount of the entire wind farm without introducing a central processing unit of the wind farm.

### Solution to Problem

In order to address the above drawbacks, a wind farm according to the present invention includes the subjectmatter defined in claim 1.

### Advantageous Effects of Invention

According to the present invention, it is possible to provide a wind farm and a wind power generator capable of improving the power generation amount of the entire wind farm without introducing a central processing unit of the wind farm.

The drawbacks, configurations, and effects other than those described above will be clarified by the description of the following embodiments.

### Brief Description of Drawings

FIG. 1 is an overall schematic configuration diagram showing an example of a wind power generator according to a first embodiment.
FIG. 2 is a schematic diagram showing an example of a relationship between the wind power generator and a wind direction.
FIG. 3 is a diagram showing an example of a relationship between the wind power generator located on the windward side and the wind power generator located on the leeward side that are installed in a wind farm.
FIG. 4 is a top view showing an example of a small-sized wind farm composed of the wind power generator located on the windward side and the wind power generator located on the leeward side.
FIG. 5 is a top view showing an example of a large-sized wind farm composed of a large number of wind power generators.
FIG. 6 is a diagram showing an example of a propagation direction of a wind turbine slipstream generated by a relationship between an orientation of a rotational plane of a rotor constituting the wind power generator and a wind direction.
FIG. 7 is a diagram showing an example of controlling the orientation of the rotational plane of the rotor constituting the wind power generator located on the windward side.
FIG. 8 is an example of a functional block diagram of a controller.
FIG. 9 is a flowchart showing an example of a processing flow of the controller.
FIG. 10 is an example of a functional block diagram of the controller.
FIG. 11 is a flowchart showing an example of the processing flow of the controller.
FIG. 12 is a graph showing an example of a yaw error.

### Description of Embodiments

In the present specification, as a wind power generator according to embodiments of the present invention, a downwind type of a wind power generator will be described as an example, but the present invention is applicable to an upwind type of a wind power generator. Further, an example in which a rotor is composed of three blades and a hub is shown, but the present invention is not limited to this, and the rotor may be composed of a hub and at least one blade. A wind farm in which a plurality of wind power generators according to embodiments of the present invention are installed to be adjacent to each other can be provided at any place of offshore, mountainous, and plain areas.

Hereinafter, embodiments of the present invention will be described with reference to the drawings. It should be noted that the embodiments described below do not limit the invention recited in the scope of claims, and all of the elements and combinations thereof described in embodiments are not always essential for a solving means of the invention. It should be noted that in each drawing, the same components are designated by the same reference numerals, and the detailed description of overlapping portions will be omitted.

### [First Embodiment]

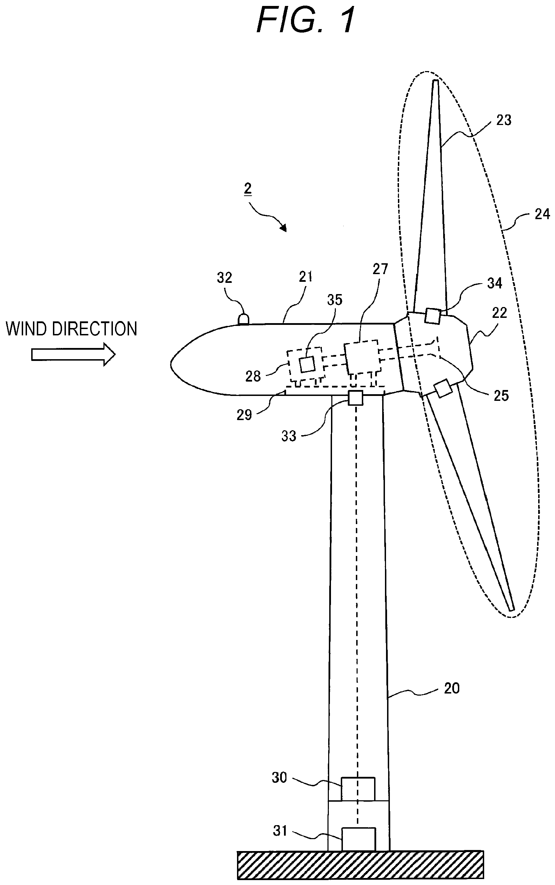

A control method of a wind power generator in a first embodiment will be described with reference to FIGS. 1 to 9. FIG. 1 is an overall schematic configuration diagram showing an example of the wind power generator in the first embodiment. As shown in FIG. 1, a wind power generator 2 includes blades 23 that rotate by receiving wind, a hub 22 that supports the blades 23, a nacelle 21, and a tower 20 that supports the nacelle 21 to be rotatable.

In the nacelle 21, provided are a main shaft 25 connected with the hub 22 and rotating together with the hub 22, a speed increaser 27 connected with the main shaft 25 to increase a rotation speed, and a generator 28 that rotates a rotor at a rotation speed that has been increased by the speed increaser 27 to generate power.

Further, an installation orientation of the blades 23 is referred to as a pitch angle, and the wind power generator 2 includes a pitch angle controller 34 that controls the pitch angle, that is, the orientation of the blades 23. A part that transmits the rotational energy of the blades 23 to the generator 28 is referred to as a power transmission unit. In the present embodiment, the main shaft 25 and the speed increaser 27 are included in the power transmission unit. The speed increaser 27 and the generator 28 are held on a main frame 29, and the generator 28 includes a power generator controller 35 that controls a movement of the generator 28.

Further, a rotor 24 is composed of the blades 23 and the hub 22. As shown in FIG. 1, a power converter 30 that converts the frequency of electric power, a switch and a transformer for switching to open and close electric current (not shown), a controller 31, and the like are arranged in the tower 20. In FIG. 1, the power converter 30 and the controller 31 are installed at the bottom of the tower. However, the installation locations of these devices are not limited to the bottom of the tower. As long as the installation locations are inside the wind power generator 2, it is also conceivable that the power converter 30 and the controller 31 are installed at another location.

Further, a wind direction anemometer 32 that measures wind direction data and wind speed data is installed on an upper surface of the nacelle 21. As the controller 31, for example, a control panel or SCADA (Supervisory Control And Data Acquisition) is used.

Further, an orientation of the nacelle 21 is referred to as a yaw angle, and the wind power generator 2 includes a yaw angle controller 33 that controls the orientation of the nacelle 21, that is, an orientation of the rotational plane of the rotor 24. As shown in FIG. 1, the yaw angle controller 33 is arranged between a bottom surface of the nacelle 21 and a tip end portion of the tower 20, and is composed of, for example, at least an actuator and a motor for driving the actuator, which are not shown. The motor constituting the yaw angle controller 33 rotates, based on a yaw angle control command output from the controller 31 via a signal line, the actuator is displaced by a desired amount, and the nacelle 21 rotates to have a desired yaw angle.

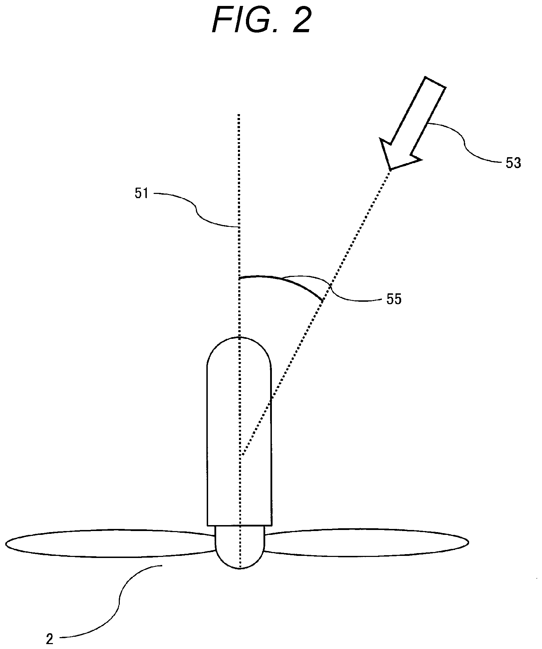

FIG. 2 is a schematic diagram showing an example of a relationship between the wind power generator and the wind direction. A deviation between a nacelle direction 51, which corresponds to an orientation of the wind power generator 2, and a wind direction 53 is referred to as a yaw error 55. Generally, the nacelle direction 51 is controlled by the yaw angle controller 33 so that the yaw error 55 becomes smaller.

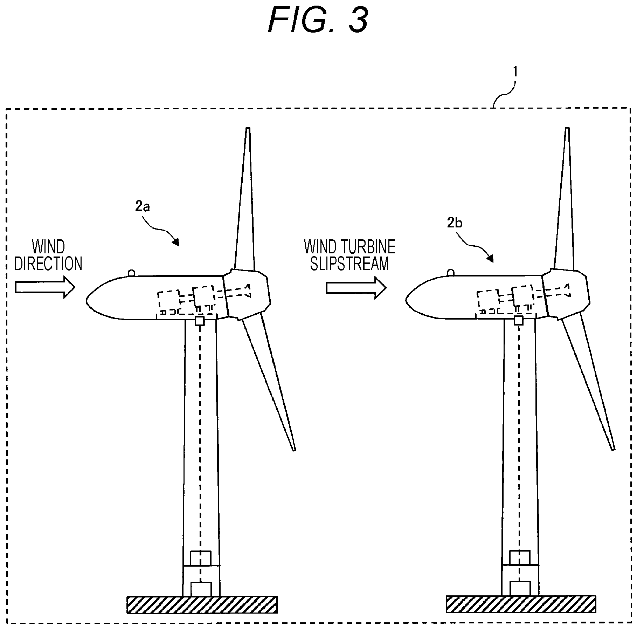

Here, a wind farm according to the present embodiment will be described. FIG. 3 is a diagram showing an example of a relationship between a wind power generator located on the windward side and a wind power generator located on the leeward side that are installed in the wind farm.

FIG. 3 shows an example in which the wind that has passed through a wind power generator 2a, which is installed in the wind farm 1 and which is located on the windward side, flows into a wind power generator 2b located on the leeward side. As shown in FIG. 3, the wind that has passed through the wind power generator 2a located on the windward side is referred to as a wind turbine slipstream (simply referred to as a slipstream). In such a wind turbine slipstream, wind characteristics such as a wind direction and a wind speed change as compared with those before the wind flows into the wind power generator 2a located on the windward side. Such changes in the characteristics depend on an operating state of the wind power generator 2a located on the windward side. The operating state described here includes an inclination angle (the pitch angle) of the blades 23 of the wind power generator or the orientation of the rotational plane of the rotor 24.

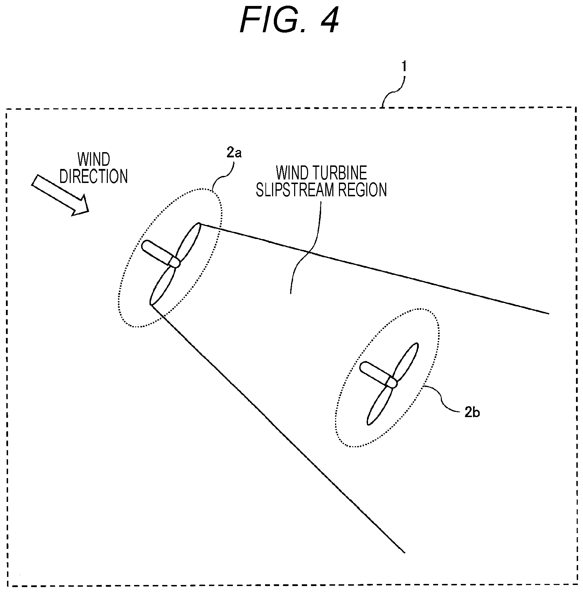

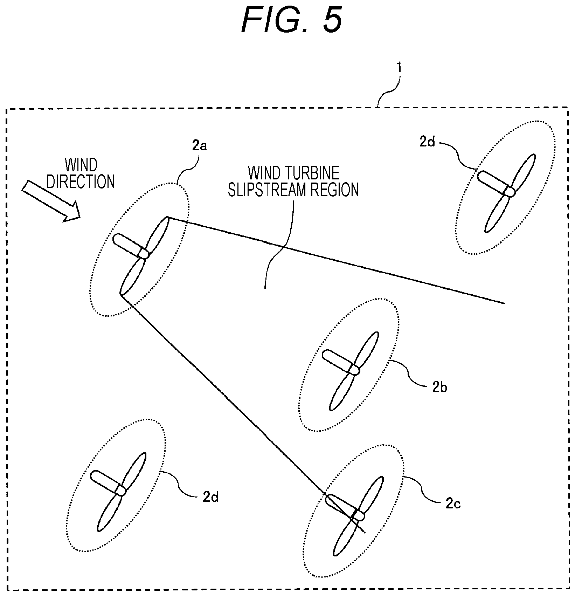

FIG. 4 is a top view showing an example of a small-sized wind farm including a wind power generator located on the windward side and a wind power generator located on the leeward side. FIG. 5 is a top view showing an example of a large-sized wind farm including a large number of wind power generators. FIG. 4 shows an example of a small-sized wind farm 1 including the wind power generator 2a located on the windward side and the wind power generator 2b located on the leeward side. FIG. 5 shows an example of a large-sized wind farm 1 including the wind power generator 2a located on the windward side, the wind power generator 2b located on the leeward side, a wind power generator 2c partially influenced by the wind turbine slipstream, and a large number of wind power generators 2d. The wind farm 1 described here refers to an aggregated type of wind power plant or a wind power generator group including at least two or more wind power generators.

The wind power generators 2 installed in the wind farm 1 are classified, with respect to the wind direction, into the wind power generator 2a located on the windward side, the wind power generator 2b located on the leeward side, the wind power generator 2c partially influenced by the wind turbine slipstream, and the other wind power generators 2d, and this classification changes as the wind direction changes. Specifically, in the example of FIG. 5, the wind turbine slipstream generated by the wind power generator 2a located on the windward side flows into the wind power generator 2b located on the leeward side. However, depending on a change in the wind direction, there may be a case where the wind power generator 2b, the wind power generator 2c, or the wind power generator 2d, which are located on the leeward side, plays a role similar to that of the wind power generator 2a located on the windward side, or a case where the wind power generator 2a, the wind power generator 2c, or the wind power generator 2d, which are located on the windward side, play a role similar to that of the wind power generator 2b located on the leeward side.

Here, the wind turbine slipstream (slipstream) will be described. The wind that passes through the wind power generator 2a located on the windward side changes in wind conditions such as the wind direction and the wind speed due to an influence of the rotation of the rotor 24 constituting the wind power generator 2a located on the windward side. The wind conditions that change in this situation are not limited to the above-mentioned wind direction and wind speed. All physical quantities related to the wind such as turbulent flow characteristics and vortex shapes, which are turbulence forms of the wind, can be considered. As shown in FIGS. 4 and 5, the wind turbine slipstream (slipstream) passes through the wind power generator 2a located on the windward side, and then spreads and flows to the leeward side. That is, the wind turbine slipstream propagates to the leeward side while diffusing and generating vortices (turbulence). A region in which the wind turbine slipstream propagates to the leeward side while diffusing and generating vortices (turbulence) in this manner is hereinafter referred to as a wind turbine slipstream region (also referred to as a slipstream region). In the wind power generator 2b and the wind power generator 2c located on the leeward side shown in FIG. 5, the power generation amount is lower than that of the wind power generator 2d located outside the wind turbine slipstream region (slipstream region), and the damage degrees accumulated in the wind power generator 2b and the wind power generator 2c located on the leeward side increase.

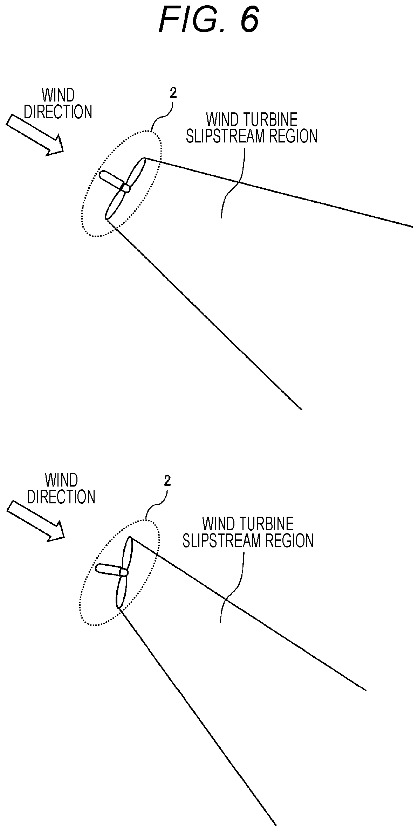

FIG. 6 shows an example of a propagation direction of a wind turbine slipstream generated by a relationship between an orientation of the rotational plane of the rotor constituting the wind power generator and a wind direction. As shown in the upper drawing of FIG. 6, in a case where the rotational plane of the rotor 24 of the wind power generator 2 is straightly oriented to the wind direction, the wind turbine slipstream propagates in the same direction as the wind direction, and a wind turbine slipstream region (slipstream region) is formed. On the other hand, as shown in the lower drawing of FIG. 6, in a case where the rotational plane of the rotor 24 of the wind power generator 2 is oriented obliquely to the wind direction, the wind that flows into the wind power generator 2 is caused to propagate obliquely with respect to the wind direction due to a lateral force received from the rotational plane of the rotor 24, and a wind turbine slipstream region (slipstream region) inclined with respect to the wind direction is formed. In a case where a deviation between the wind direction and the orientation of the rotational surface of the rotor, that is, a yaw error is large, a deviation between the propagation direction in the slipstream region and the wind direction is also large.

In a case where the propagation direction in the slipstream region is desired to be changed more largely, the yaw error of the wind power generator on the windward side needs to be larger.

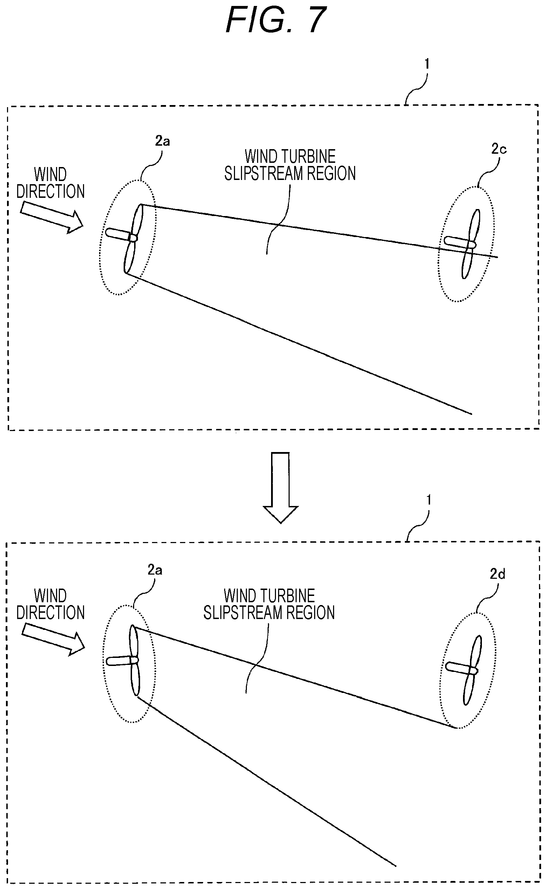

FIG. 7 shows an example of controlling the orientation of the rotational plane of the rotor 24 constituting the wind power generator 2a located on the windward side. With respect to the wind power generator 2a located on the wind side, in a case where the wind power generator 2c, which is partially influenced by the wind turbine slipstream, is not present, the wind power generator 2a located on the windward side causes the yaw angle controller 33 (FIG. 1) to control the rotational plane of the rotor 24 so as to be straightly oriented to the wind direction as usual.

On the other hand, as shown in the upper drawing of FIG. 7, with respect to the wind power generator 2a located on the windward side, in a case where the wind power generator 2c (or the wind power generator 2b located on the leeward side), into which the wind turbine slipstream partially flows, is present, the yaw angle controller 33 provided in the wind power generator 2a located on the windward side controls the yaw angle so as to change the orientation of the rotational plane of the rotor 24, as shown in the lower drawing of FIG. 7. Accordingly, the propagation direction of the wind turbine slipstream is changed.

The wind power generator 2c (or the wind power generator 2b located on the leeward side), into which the wind turbine slipstream partially flows, is located outside the wind turbine slipstream region (slipstream region). This prevents the wind turbine slipstream to flow into the wind power generator 2c (or the wind power generator 2b located on the leeward side), and enables the wind power generator 2c (or the wind power generator 2b located on the leeward side) to operate as the wind power generator 2d. In this situation, in a case where the yaw error, which is a deviation between the orientation of the rotational plane of the rotor 24 of the wind power generator 2a located on the windward side and the wind direction, becomes large, the damage degree of the wind power generator 2a located on the windward side increases.

Therefore, as shown in the lower drawing of FIG. 7, in a case where the wind power generator 2a located on the windward side conducts yaw control that satisfies a condition where the wind power generator 2c (or the wind power generator 2b located on the leeward side) is located outside the wind turbine slipstream region (slipstream region), and there is a risk that the yaw error of the wind power generator 2a located on the windward side exceeds a predetermined value, an operation mode of the wind power generator 2a located on the windward side is changed to a degraded operation mode. Here, the degraded operation means a state in which the pitch angle controller 34 and the power generator controller 35 of the wind power generator reduce the energy recovered from the wind so as to operate while always reducing the output. Accordingly, although the power generation output of the wind power generator 2a located on the windward side decreases, an increase in the damage degree can be suppressed. In addition, the influence of the slipstream generated by the wind power generator 2a located on the windward side can be reduced, and the influence of the slipstream received by the wind power generator 2c (or the wind power generator 2b located on the leeward side) can be reduced. Accordingly, the power generation amount of the wind power generator 2c (or the wind power generator 2b located on the leeward side) is recovered as compared with the case where the influence of the slipstream is received, and the power generation amount of the wind farm as a whole is improved.

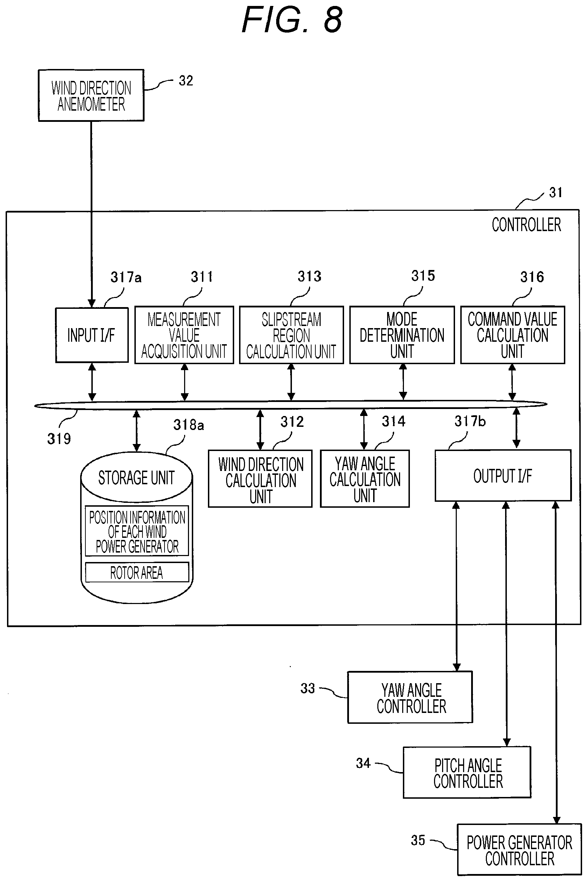

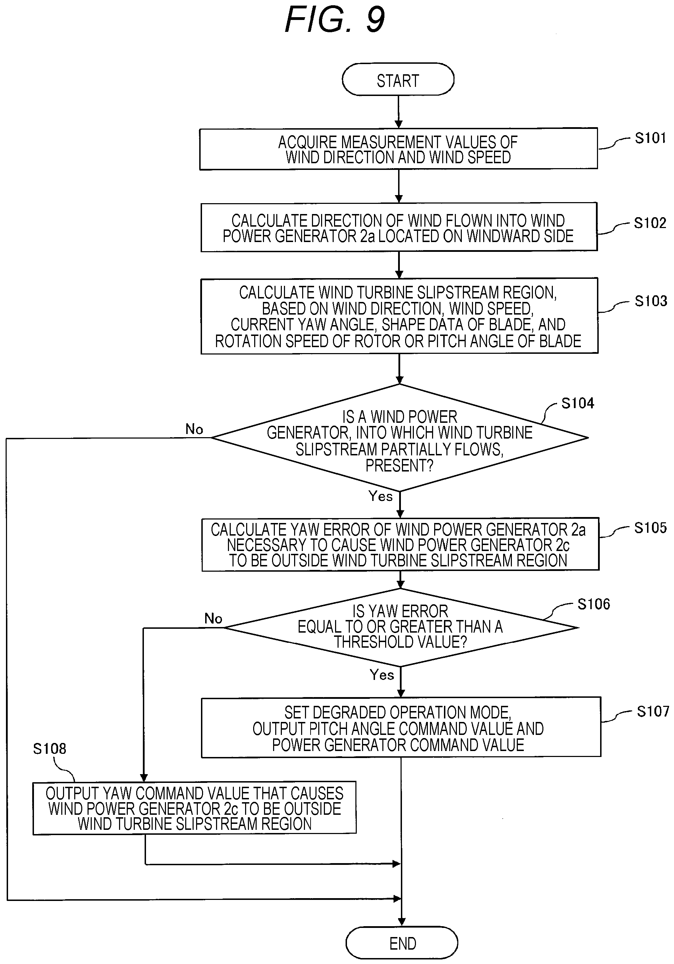

FIG. 8 shows an example of a functional block diagram of the controller 31 arranged in the tower 20 of the wind power generator 2 shown in FIG. 1. FIG. 9 shows an example of a processing flow of the controller shown in FIG 8. The controller 31 described below is provided in all the wind power generators (2a to 2d) installed in the wind farm 1, but the operation shown in the flowchart of FIG. 8 to be described later is performed by the wind power generator 2 located on the windward side. That is, the operation is performed by the wind power generator 2a, which is installed in the wind farm 1 and which is located on the windward side.

As shown in FIG. 8, the controller 31 includes a measurement value acquisition unit 311, a wind direction calculation unit 312, a slipstream region calculation unit (wind turbine slipstream calculation unit) 313, a yaw angle calculation unit 314, a mode determination unit 315, a command value calculation unit 316, an input I/F 317a, an output I/F 317b, and a storage unit 318a, which are connected with each other so as to be accessible by an internal bus 319. The measurement value acquisition unit 311, the wind direction calculation unit 312, the slipstream region calculation unit 313, the yaw angle calculation unit 314, the mode determination unit 315, and the command value calculation unit 316 are implemented by, for example, processors such as a CPU (Central Processing Unit), not shown, a ROM that stores various programs, a RAM that temporarily stores data in a calculation process, and a storage device such as an external storage device. In addition, a processor such as a CPU reads and executes various programs stored in the ROM, and stores calculation results, which are the execution results, in the R_AM or the external storage device. It should be noted that each functional block is illustrated for facilitating the understanding of the description. However, the measurement value acquisition unit 311, the wind direction calculation unit 312, the slipstream region calculation unit 313, the yaw angle calculation unit 314, the mode determination unit 315, and the command value calculation unit 316 may be configured as one calculation unit, or may be configured to integrate desired functional blocks.

The measurement value acquisition unit 311 acquires wind direction data and wind speed data that have been measured by the wind direction anemometer 32 via the input I/F 317a and the internal bus 319, and performs for example, A/D conversion processing, smoothing processing (noise removal), or normalization processing.

The storage unit 318a stores beforehand at least position information of itself (the wind power generator 2a located on the windward side) in the wind farm 1 and an area of the rotational plane of the rotor 24 of itself, position information of the other wind power generators (2b to 2d) installed in the wind farm 1, areas of the rotational planes of the rotors 24 of the other wind power generators (2b to 2d), and a thrust coefficient in the operation of the wind power generator. It should be noted that here, the area of the rotational plane of the rotor 24 means, for example, an area in a case of being straightly oriented to the rotational plane of the rotor 24 at zero degrees of the yaw angle, and includes an area of the tower 20. Further, in the storage unit 318a, a current yaw angle (information of the orientation of the rotational plane of the rotor 24) of itself (the wind power generator 2a located on the windward side), shape data of the blades 23, a rotation speed of the rotor 24, and a pitch angle of the blades 23 are stored.

The wind direction calculation unit 312 acquires the wind direction data that has been processed by the measurement value acquisition unit 311 via the internal bus 319, and determines the direction of the wind that flows into the rotational plane of the rotor 24 of itself (the wind power generator 2a located on the windward side).

The slipstream region calculation unit 313 calculates the wind turbine slipstream region (slipstream region), based on, for example, the wind direction that has been determined by the wind direction calculation unit 312, the wind speed data that has been processed by the measurement value acquisition unit 311, the current yaw angle (the information of the orientation of the rotational plane of the rotor 24), the shape data of the blades 23, and the rotation speed of the rotor 24 or the pitch angle of the blades 23 that are stored in the storage unit 318a. It should be noted that without limiting to the use of all the above-mentioned parameters, the wind turbine slipstream region (slipstream region) may be calculated, at least based only on the wind direction data, the wind speed data, and the current yaw angle (information of the orientation of the rotational plane of the rotor 24). Further, the wind turbine slipstream region (slipstream region) may be calculated, based only on the wind direction data.

The yaw angle calculation unit 314 accesses the storage unit 318a via the internal bus 319, and determines the presence or absence of the wind power generator 2b or 2c, into which the wind turbine slipstream flows, based on the position information of the other wind power generators (2b to 2d) installed in the wind farm 1 and the areas of the rotational planes of the rotors 24 of the other wind power generators (2b to 2d) that have been read from the storage unit 318a, and the wind turbine slipstream region (slipstream region) that has been calculated by the slipstream region calculation unit 313. In a case where the wind power generator 2b or 2c, into which the wind turbine slipstream flows, is present, the position information and the area of the rotational plane of the rotor 24 of the wind power generator 2b or 2c are read from the storage unit 318a. A yaw error of the wind power generator 2a, for a case where the slipstream region is controlled so that the slipstream generated by the wind power generator 2a does not flow into the wind power generator 2b or 2c, is calculated. The yaw angle calculation unit 314 transfers the information to the mode determination unit 315 via the internal bus 319. It should be noted that in the determination of the presence or absence of the wind power generator 2b or 2c, into which the wind turbine slipstream flows, the determination may be made, based only on the position information of the other wind power generators (2b to 2d) and the wind turbine slipstream region (slipstream region) that has been calculated by the slipstream region calculation unit 313.

The mode determination unit 315 selects an optimal operation mode of the wind power generator 2a from three modes including a normal operation mode in which the influence of the slipstream is not considered, a slipstream control mode in which the slipstream does not flow into the wind power generator 2b or 2c on the leeward side, and a degraded operation mode in which the operation of the wind power generator 2a is degraded to reduce the influence of the slipstream, based on the yaw error information necessitated by the wind power generator 2a that has been transferred from the yaw angle calculation unit 314.

The command value calculation unit 316 corresponds to the operation mode that has been selected by the mode determination unit 315, and in the normal operation mode, outputs a normal command value that does not consider the influence of the slipstream to the yaw angle controller 33, the pitch angle controller 34, and the power generator controller 35 via the output I/F 317b. In the slipstream control mode, the command value calculation unit 316 calculates the orientation of the rotational plane of the rotor 24 in the wind power generator 2a located on the windward side, based on the position information and the area of the rotational plane of the rotor 24 of the wind power generator 2b or 2c, into which the wind turbine slipstream flows, that have been read from the storage unit 318a, so as not to cause the slipstream to flow into the wind power generator 2b or 2c located on the leeward side. Then, the command value calculation unit 316 outputs a yaw angle control command corresponding to the orientation of the rotational plane of the rotor 24 to the yaw angle controller 33 via the output I/F. Finally, in the degraded operation mode, the command value calculation unit 316 outputs command values of the respective controllers to the yaw angle controller 33, the pitch angle controller 34, and the power generator controller 35 via the output I/F, so as to degrade the output of the wind power generator 2a. Specifically, the command value calculation unit 316 outputs the command value to the pitch angle controller 34 via the output I/F, so that the pitch angle becomes closer to be parallel to the wind direction so as to reduce the amount of energy recovered by the wind power generator. Alternatively, the command value calculation unit 316 outputs a command value of generator torque to the power generator controller 35 via the output I/F, so that the energy recovered by the wind power generator 2 becomes smaller.

Next, an operation of the controller 31 will be described. FIG. 9 is a flowchart showing a processing flow of the controller shown in FIG. 8. As shown in FIG. 9, in step S101, the measurement value acquisition unit 311 acquires the wind direction data and the wind speed data that have been measured by the wind direction anemometer 32 via the input I/F 317a and the internal bus 319, and performs, for example, A/D conversion processing, smoothing processing (noise removal), normalization processing, or the like. Then, the measurement value acquisition unit 311 transfers the wind direction data that has been subjected to the processing to the wind direction calculation unit 312 via the internal bus 319.

In step S102, the wind direction calculation unit 312 determines the direction of the wind that flows into the rotational plane of the rotor 24 of the wind power generator 2a (itself) located on the windward side, based on the wind direction data that has been processed and transferred by the measurement value acquisition unit 311.

In step S103, the slipstream region calculation unit 313 calculates a wind turbine slipstream region (slipstream region), based on the wind direction that has been determined by the wind direction calculation unit 312, the wind speed data that has been processed by the measurement value acquisition unit 311, the current yaw angle (information of the orientation of the rotational plane of the rotor 24), the shape data of the blade 23, and the rotation speed of the rotor 24 or the pitch angle of the blade 23 that are stored in the storage unit 318a.

In step S104, the mode determination unit 315 accesses the storage unit 318a via the internal bus 319, and determines the presence or absence of the wind power generator 2b or 2c, into which the wind turbine slipstream flows, based on the position information of other wind power generators (2b to 2d) installed in the wind farm 1 that has been read from the storage unit 318a and the wind turbine slipstream region (slipstream region) that has been calculated by the slipstream region calculation unit 313. As a result of the determination, in a case where the wind power generator 2b or 2c, into which the wind turbine slipstream flows, is absent, the wind power generator 2a located on the windward side causes the yaw angle controller 33 (FIG. 1) to control the yaw angle so that the rotational plane of the rotor 24 is straightly oriented to the wind direction, and the processing ends (the normal operation mode). On the other hand, as a result of the determination, in a case where the wind power generator 2b or 2c, into which the wind turbine slipstream flows, is present, the processing proceeds to step S105.

In step S105, the yaw angle calculation unit 314 accesses the storage unit 318a via the internal bus 319, and calculates a yaw error of the wind power generator on the windward side so that the wind power generator 2b or 2c located on the leeward side is outside the wind turbine slipstream region generated by the wind power generator 2a located on the windward side, based on the position information of the other wind power generators (2b to 2d) installed in the wind farm 1 that has been read from the storage unit 318a and the wind turbine slipstream region (slipstream region) that has been calculated by the slipstream region calculation unit 313.

In step S106, it is determined whether the yaw error that has been obtained by the yaw angle calculation unit 314 is equal to or greater than a threshold value. The mode determination unit 315 determines an operation mode, based on the yaw error that has been obtained by the yaw angle calculation unit 314. As a result of the determination, in a case where the absolute value of the yaw error is less than the threshold value, the processing proceeds to step S108, and the operation mode shifts to the slipstream control mode. On the other hand, in a case where the absolute value of the yaw error is equal to or greater than the threshold value, the processing proceeds to step S107, and sets the degraded operation mode.

In step S107, the degraded operation mode is set, the command value calculation unit 316 calculates control command values in the degraded operation mode, and outputs the command values for the respective controllers via the output I/F 317b to the yaw angle controller 33, the pitch angle controller 34, and the power generator controller 35. Then, the processing ends.

In step S108, the command value calculation unit 316 outputs, to the yaw angle controller 33 via the output I/F, a command value corresponding to the yaw error of the wind power generator located on the windward side that has been calculated by the yaw angle calculation unit 314, so that the wind power generator 2b or 2c located on the leeward side is outside the slipstream region generated by the wind power generator 2a located on the windward side. Then, the processing ends.

It should be noted that in the present embodiment, the description has been given of a small-sized wind farm configured with two wind power generators and a large-sized wind farm in which a large number of three or more wind power generators are offset installed to be separated from each other at a predetermined space. However, the present embodiment is not limited to this. For example, the present embodiment is similarly applicable to a wind farm in which a large number of three or more wind power generators are separated from each other at a predetermined space and are installed in a two-dimensional matrix.

As described above, according to the present embodiment, it is possible to provide a wind farm and a wind power generator having an improved total output of the wind farm without introducing a central processing unit of the wind farm.

Specifically, according to the present embodiment, by controlling the orientation of the rotational plane of the rotor 24 of the wind power generator 2a located on the windward side and combining a plurality of operation modes, the influence of the slipstream received by the wind power generator 2b or 2c on the leeward side can be reduced and the total output of the wind power generators in the wind farm can be improved. In addition, since it is not necessary to prepare a wind power generator having a new structure or its parts, the introduction is easy. Further, since there is no need to communicate with another wind power generator or with a central management system that monitors the entire wind farm, each wind power generator can be easily introduced independently in the wind farm.

### [Second Embodiment]

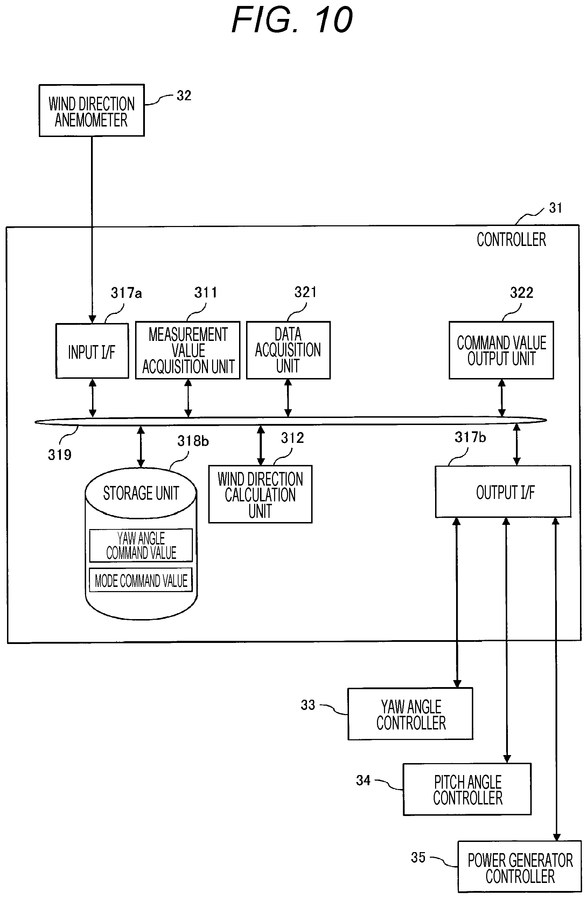

FIG. 10 is an example of a functional block diagram of a controller constituting a wind power generator in a second embodiment according to another embodiment. The present embodiment is different from the first embodiment in that a yaw angle command value and an operation mode for each wind direction are evaluated beforehand by analysis and a database is created so as to reduce the calculation amount in the controller of the wind power generator 2. The same components as in the first embodiment are designated by the same reference numerals, and the description overlapping with the first embodiment will be omitted below.

As shown in FIG. 10, the controller 31 includes the measurement value acquisition unit 311, the wind direction calculation unit 312, a data acquisition unit 321, a command value output unit 322, the input I/F 317a, the output I/F 317b, and a storage unit 318b, which are connected with each other to be accessible by the internal bus 319. The measurement value acquisition unit 311, the wind direction calculation unit 312, the data acquisition unit 321, and the command value output unit 322 are implemented by, for example, processors such as a CPU (Central Processing Unit), not shown, a ROM that stores various programs, a RAM that temporarily stores data in a calculation process, and a storage device such as an external storage device. In addition, a processor such as a CPU reads and executes various programs stored in the ROM, and stores calculation results, which are the execution results, in the RAM or the external storage device. It should be noted that each functional block is illustrated for facilitating the understanding the description. However, the measurement value acquisition unit 311, the wind direction calculation unit 312, the data acquisition unit 321, and the command value output unit 322 may be configured as one calculation unit, or may be configured to integrate desired functional blocks.

The measurement value acquisition unit 311 acquires wind direction data and wind speed data that have been measured by the wind direction anemometer 32 via the input I/F 317a and the internal bus 319, and performs for example, A/D conversion processing, smoothing processing (noise removal), or normalization processing.

The storage unit 318b stores at least each control command value for each wind direction and each wind speed. In this situation, the command values that are stored are command values that have been calculated beforehand by analyzing each wind direction and each wind speed, based on the layout of the wind power generator, and include not only yaw angle command values but also pitch angle command values and command values for a power generator in the degraded operation.

The wind direction calculation unit 312 acquires the wind direction data that has been processed by the measurement value acquisition unit 311 via the internal bus 319, and determines the direction of the wind that flows into the rotational plane of the rotor 24 of itself (the wind power generator 2a located on the windward side).

The data acquisition unit 321 acquires the operation mode and the control command value from the storage unit 318b, based on the wind direction and the wind speed that have been obtained by the measurement value acquisition unit 311 and the wind direction calculation unit 312.

The command value output unit 322 outputs the control mode and the command value, which have been acquired by the data acquisition unit 321 from the storage unit 318b, to the yaw angle controller 33, the pitch angle controller 34, and the power generator controller 35 via the output I/F.

Here, a method for creating a command value for each wind direction and each wind speed stored in the storage unit 318b will be described. As a method for deriving the slipstream region generated by the wind power generator, a model formula formulated as a function of the wind speed and the wind direction or a method for numerically solving the Navier-Stokes equation, which is the governing equation of the wind, can be mentioned. In a case where the former model formula is used, no numerical analysis is necessary, and the calculation is enabled in the controller as described in the first embodiment. On the other hand, the method for solving the governing equation has a high calculation load. Hence, it is difficult to conduct the calculation in the controller, but by analyzing with a dedicated computer or the like beforehand and creating a database, more accurate evaluation of the slipstream region is enabled.

As described above, according to the present embodiment, it is possible to provide a wind farm and a wind power generator having an improved total output of the wind farm without introducing a central processing unit of the wind farm.

Specifically, according to the present embodiment, the calculation amount in the controller 31 is reduced by calculating each control command value for each wind direction and each wind speed beforehand from the positional relationship of the wind power generators. At the same time, by evaluating the slipstream region with higher accuracy, a further improvement in the total power generation amount of the entire wind farm can be expected.

### [Third Embodiment]

The present embodiment is different from the first and second embodiments in that original yaw control is continued even in the degraded operation mode so that the yaw angle command value for each wind direction changes continuously. The same components as those in the first and second embodiments are designated by the same reference numerals, and the description overlapping with the first and second embodiments will be omitted below.

In the present embodiment, as shown in FIG. 8, the controller 31 includes the measurement value acquisition unit 311, the wind direction calculation unit 312, the slipstream region calculation unit 313, the yaw angle calculation unit 314, and the mode determination unit 315, the command value calculation unit 316, the input I/F 317a, the output I/F 317b, and the storage unit 318a, which are connected with each other so as to be accessible by the internal bus 319. The measurement value acquisition unit 311, the wind direction calculation unit 312, the slipstream region calculation unit 313, the yaw angle calculation unit 314, the mode determination unit 315, and the command value calculation unit 316 are implemented by, for example, processors such as a CPU (Central Processing Unit), not shown, a ROM that stores various programs, a RAM that temporarily stores data in a calculation process, and a storage device such as an external storage device. In addition, a processor such as a CPU reads and executes various programs stored in the ROM, and stores calculation results, which are the execution results, in the R_AM or the external storage device. It should be noted that each functional block is illustrated for facilitating the understanding of the description. However, the measurement value acquisition unit 311, the wind direction calculation unit 312, the slipstream region calculation unit 313, the yaw angle calculation unit 314, the mode determination unit 315, and the command value calculation unit 316 may be configured as one calculation unit, or may be configured to integrate desired functional blocks.

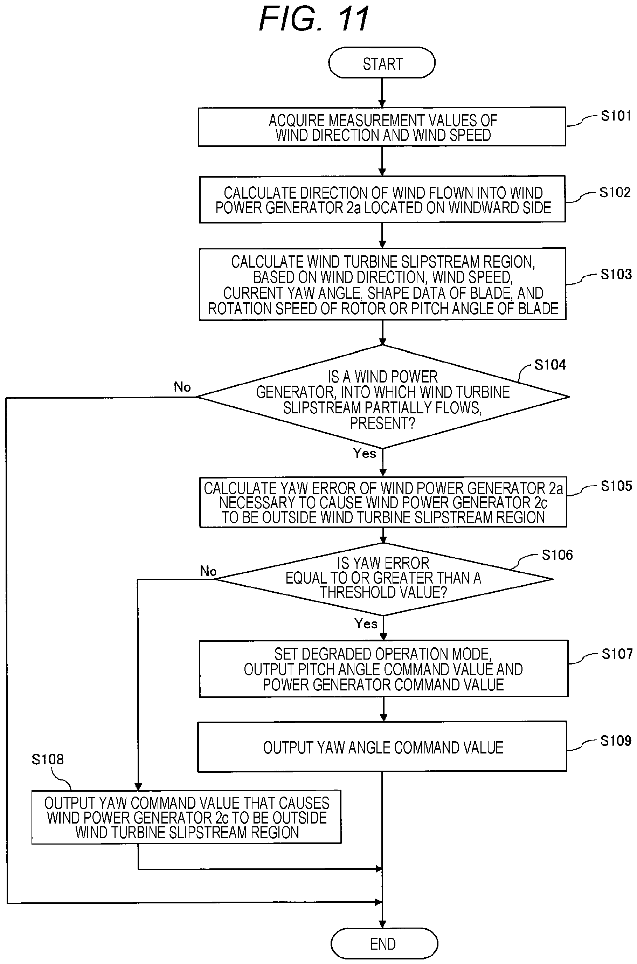

Next, an operation of the controller 31 will be described. FIG. 11 is a flowchart showing a processing flow of the controller shown in FIG 8. As shown in FIG. 9, in step S101, the measurement value acquisition unit 311 acquires the wind direction data and the wind speed data that have been measured by the wind direction anemometer 32 via the input I/F 317a and the internal bus 319, and performs, for example, A/D conversion processing, smoothing processing (noise removal), normalization processing, or the like. Then, the measurement value acquisition unit 311 transfers the wind direction data that has been subjected to the processing to the wind direction calculation unit 312 via the internal bus 319.

In step S102, the wind direction calculation unit 312 determines the direction of the wind that flows into the rotational plane of the rotor 24 of the wind power generator 2a (itself) located on the windward side, based on the wind direction data that has been processed and transferred by the measurement value acquisition unit 311.

In step S103, the slipstream region calculation unit 313 calculates a wind turbine slipstream region (slipstream region), based on the wind direction that has been determined by the wind direction calculation unit 312, the wind speed data that has been processed by the measurement value acquisition unit 311, the current yaw angle (information of the orientation of the rotational plane of the rotor 24), the shape data of the blade 23, and the rotation speed of the rotor 24 or the pitch angle of the blade 23 that are stored in the storage unit 318a.

In step S104, the mode determination unit 315 accesses the storage unit 318a via the internal bus 319, and determines the presence or absence of the wind power generator 2b or 2c, into which the wind turbine slipstream flows, based on the position information of other wind power generators (2b to 2d) installed in the wind farm 1 that has been read from the storage unit 318a and the wind turbine slipstream region (slipstream region) that has been calculated by the slipstream region calculation unit 313. As a result of the determination, in a case where the wind power generator 2b or 2c, into which the wind turbine slipstream flows, is absent, the wind power generator 2a located on the windward side causes the yaw angle controller 33 (FIG. 1) to control the yaw angle so that the rotational plane of the rotor 24 is straightly oriented to the wind direction, and the processing ends (the normal operation mode). On the other hand, as a result of the determination, in a case where the wind power generator 2b or 2c, into which the wind turbine slipstream flows, is present, the processing proceeds to step S105.

In step S105, the yaw angle calculation unit 314 accesses the storage unit 318a via the internal bus 319, and calculates a yaw error of the wind power generator on the windward side so that the wind power generator 2b or 2c located on the leeward side is outside the wind turbine slipstream region generated by the wind power generator 2a located on the windward side, based on the position information of the other wind power generators (2b to 2d) installed in the wind farm 1 that has been read from the storage unit 318a and the wind turbine slipstream region (slipstream region) that has been calculated by the slipstream region calculation unit 313.

In step S106, it is determined whether the yaw error that has been obtained by the yaw angle calculation unit 314 is equal to or greater than a threshold value. The mode determination unit 315 determines an operation mode, based on the yaw error that has been obtained by the yaw angle calculation unit 314. As a result of the determination, in a case where the absolute value of the yaw error is equal to or less than the threshold value, the processing proceeds to step S108, and the operation mode shifts to the slipstream control mode. On the other hand, in a case where the absolute value of the yaw error is equal to or greater than the threshold value, the processing proceeds to step S107, and sets the degraded operation mode.

In step S107, the degraded operation mode is set, the command value calculation unit 316 calculates control command values in the degraded operation mode, and outputs the command values for the respective controllers to the yaw angle controller 33, the pitch angle controller 34, and the power generator controller 35 via the output I/F 317b.

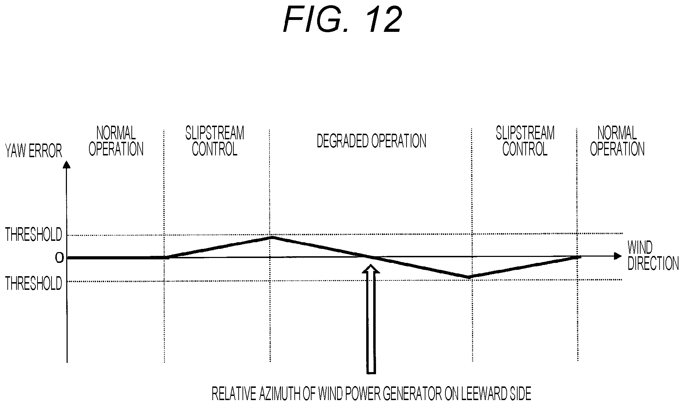

FIG. 12 shows an example of a graph of yaw errors in the present embodiment. As a characteristic of the present embodiment, the yaw error is continuously changed so that the yaw error becomes 0 at a wind direction that matches a relative azimuth of the wind power generator 2b or 2c on the leeward side in the degraded operation mode.

In the present embodiment, unlike the first embodiment, in step S109, the yaw angle command value is calculated so that the yaw error is different for each wind direction, and the yaw angle command value is output.

In step S108, the command value calculation unit 316 outputs, to the yaw angle controller 33 via the output I/F, a command value corresponding to the yaw error of the wind power generator located on the windward side that has been calculated by the yaw angle calculation unit 314, so that the wind power generator 2b or 2c located on the leeward side is outside the slipstream region generated by the wind power generator 2a located on the windward side. Then, the processing ends.

As described above, according to the present embodiment, it is possible to provide a wind farm and a wind power generator that can improve the total output of the wind farm and improve the reliability of the wind power generator on the windward side that is to be controlled.

Specifically, according to the present embodiment, the driving numbers of yaw of the wind power generator on the windward side can be reduced by continuously changing the yaw error of the wind power generator on the windward side, and the reliability of the wind farm can be improved.

### [Fourth Embodiment]

The present embodiment is characteristic in that pitch control is used as a means for shifting to the degraded operation mode. Here, the same components as those in the first to third embodiments are designated by the same reference numerals, and the following description will be omitted, omitting the description overlapping with the first to third embodiments.

The blades 23, which are rotatably supported (the pitch angle is changed) with respect to the hub 22, are installed in the wind power generator 2. Here, the pitch angle represents the mounting angle of the blades 23 with respect to the hub 22. In addition, causing the blades 23 to be straightly oriented to the wind and changing the pitch angle so that the energy of the wind can be recovered with high efficiency is referred to as fining, and making the blade parallel to the wind so that the pitch angle is changed to escape the wind is referred to as feather. Accordingly, in the wind power generator 2, the pitch angle controller 34 adjusts the pitch angle to adjust the amount of energy recovered from the wind, and is capable of changing the operation mode.

In the present embodiment, in S107 of FIG. 9, when the wind power generator shifts to the degraded operation mode, the pitch angle is changed to the feather side from the reference control value in the normal operation mode. Accordingly, the amount of energy recovered by the wind power generator is reduced, and the power generation amount is reduced. Accordingly, the load applied to the wind power generator is also reduced, and the degraded operation mode is set. In this situation, the command value of the pitch angle may be a fixed value or may be changed according to the wind conditions such as the wind speed. On the other hand, when No is selected in S104 or S106 of FIG. 9 and the normal operation mode or the slipstream control mode is set, by returning the pitch angle command value to the reference control value in the normal operation, the amount of energy recovered by the wind power generator becomes the same as usual.

As described above, according to the present embodiment, the total output of the wind farm can be improved and the transition to the degraded operation mode can also be conducted easily.

Specifically, since the pitch angle control is used for the transition to the degraded operation mode, the amount of energy recovered from the wind by the wind power generator can be directly controlled. Therefore, the transition to the degraded operation mode can be easily conducted.

### [Fifth Embodiment]

The present embodiment is characteristic in that the torque control of the generator 28 installed in the nacelle of the wind power generator is utilized as a means for shifting to the degraded operation mode. Here, the same components as those in the first to fourth embodiments are designated by the same reference numerals, and the following description will be omitted, omitting the description overlapping with the first to the fourth embodiments.

The energy recovered by the wind power generator is expressed as the product of the rotation speed of the rotor 24 and the torque in the power generator. In the normal operation mode, the torque is controlled so that the rotation speed of the rotor 24 causes the blades 23 of the wind power generator to produce the energy in a most efficient manner.

In the present embodiment, as shown in S107 of FIG. 9, when the wind power generator is made to shift to the degraded operation mode, the torque command value is set to a value different from that in the normal operation. In this situation, the torque command value may take both a larger value and a smaller value than the reference control value in the normal operation. Specifically, by making the torque command value smaller than the reference control value in the normal operation, a method for reducing the amount of energy to be recovered can be considered. In addition, by making the torque control value larger than the reference control value in the normal operation, the rotation speed of the rotor can be reduced, the operating efficiency of the wind power generator can be lowered, and the operation mode can also be shifted to the degraded operation mode. In this situation, the command value for the torque control may be a fixed value or may be changed according to the wind conditions such as the wind speed. On the other hand, when No is selected in S104 or S106 of FIG.9 and the normal operation mode or the slipstream control mode is set, by returning the torque command value to the reference control value in the normal operation, the amount of energy recovered by the wind power generator becomes the same as usual.

As described above, according to the present embodiment, it is possible to improve the total output of the wind farm and speed up the transition to the degraded operation mode.

Specifically, in the present embodiment, since the power generator torque control is used for the transition to the degraded operation mode, the control response is very quick. Accordingly, the operation mode can be shifted to the degraded operation mode earlier, and an improvement in the power generation amount of the wind farm as a whole can be expected.

### Reference Signs List

1 wind farm
2 wind power generator
2a wind power generator located on windward side
2b wind power generator located on leeward side
2c,2d wind power generator
20 tower
21 nacelle
22 hub
23 blade
24 rotor
25 main shaft
27 speed increaser
28 generator
29 main frame
30 power converter
31 controller
32 wind direction anemometer
33 yaw angle controller
34 pitch angle controller
35 power generator controller
51 nacelle direction
53 wind direction
55 yaw error
311 measurement value acquisition unit
312 wind direction calculation unit
313 slipstream region calculation unit (wind turbine slipstream calculation unit)
314 yaw angle calculation unit
315 mode determination unit
316 command value calculation unit
317a input I/F
317b output I/F
318a storage unit
318b storage unit
319 internal bus
321 data acquisition unit
322 command value output unit

## Claims

1. A wind farm (1) comprising a plurality of wind power generators (2), the plurality of wind power generators (2) each including:
a rotor (24) which rotates by receiving at least wind;
a yaw angle controller (33) which controls an orientation of a rotational plane of the rotor (24); and
a mode switching device (31) which switches an operation mode of a wind power generator (2),
wherein the operation mode of the wind power generator (2a) located on a windward side of the plurality of wind power generators (2) is changed for each wind direction (53),
wherein the mode switching device (31) has a mode determination unit (315) that is adapted to select the operation mode of the wind power generator (2a) on the windward side from three modes including a normal operation mode in which the influence of the slipstream is not considered and a slipstream control mode in which the slipstream does not flow into the wind power generator (2b, 2c) on the leeward side,
**characterised in that** the mode determination unit (315) is adapted to select, as the third operation mode of the wind power generator (2a) on the windward side, a degraded operation mode in which the operation of the wind power generator (2a) is degraded to reduce the influence of the slipstream, based on a yaw error information necessitated by the wind power generator (2a) on the windward side.

2. The wind farm (1) according to claim 1, wherein a yaw error command value for each of the wind directions (53) is calculated from a relative position with respect to a wind power generator (2) in a vicinity, and the operation mode of the wind power generator (2a) located on the windward side of the plurality of wind power generators (2) is changed, based on the yaw error command value.

3. The wind farm (1) according to claim 2, wherein a relative azimuth and a distance between the plurality of wind power generators (2) are used, as the relative position of the wind power generator (2a) located on the windward side of the plurality of wind power generators (2) with respect to the wind power generator (2) in the vicinity.

4. The wind farm (1) according to any preceding claim, wherein a pitch angle of the wind power generator (2a) located on the windward side of the plurality of wind power generators (2) is controlled as a means for shifting to the degraded operation mode.

5. The wind farm (1) according to any preceding claim, wherein torque of the wind power generator (2a) located on the windward side of the plurality of wind power generators (2) is controlled as a means for shifting to the degraded operation mode.

6. The wind farm (1) according to any preceding claim, wherein in the degraded operation mode, the wind power generator (2a) on the windward side continuously changes a yaw error (55), and calculates a yaw error command value for setting the yaw error (55) to 0 at a wind direction (53) that matches a relative azimuth of the wind power generator (2b, 2c) on the leeward side.

7. The wind farm (1) according to any preceding claim, wherein yaw control is used as a means for switching among the three operation modes.

## Patentansprüche

1. Windpark (1), der mehrere Windkraftgeneratoren (2) umfasst, wobei die mehreren Windkraftgeneratoren (2) jeweils aufweisen:
einen Rotor (24), der sich dreht, indem er mindestens Wind aufnimmt;
eine Gierwinkelsteuerung (33), die eine Ausrichtung einer Rotationsebene des Rotors (24) steuert; und
eine Betriebsartumschaltvorrichtung (31), die eine Betriebsart eines Windkraftgenerators (2) umschaltet,
wobei die Betriebsart des Windkraftgenerators (2a), der sich auf einer windzugewandten Seite der mehreren Windkraftgeneratoren (2) befindet, für jede Windrichtung (53) geändert wird,
wobei die Betriebsartumschalteinrichtung (31) eine Betriebsartbestimmungseinheit (315) aufweist, die dazu ausgelegt ist, die Betriebsart des Windkraftgenerators (2a) auf der windzugewandten Seite aus drei Betriebsarten auszuwählen, einschließlich einer normalen Betriebsart, in der der Einfluss des Windschattens nicht berücksichtigt wird, und einer Windschattenregelungsbetriebsart, in der der Windschatten nicht in den Windkraftgenerator (2b, 2c) auf der windabgewandten Seite einfließt,
**dadurch gekennzeichnet, dass** die Betriebsartbestimmungseinheit (315) dazu ausgelegt ist, als die dritte Betriebsart des Windkraftgenerators (2a) auf der windzugewandten Seite eine basierend auf einer Gierfehlerinformation, die durch den Windkraftgenerator (2a) auf der windzugewandten Seite erforderlich ist, degradierte Betriebsart auszuwählen, in der der Betrieb des Windkraftgenerators (2a) degradiert ist, um den Einfluss des Windschattens zu reduzieren.

2. Windpark (1) nach Anspruch 1, wobei ein Gierfehler-Befehlswert für jede der Windrichtungen (53) aus einer relativen Position in Bezug auf einen Windkraftgenerator (2) in der Nähe berechnet wird und die Betriebsart des Windkraftgenerators (2a), der sich auf der windzugewandten Seite der mehreren Windkraftgeneratoren (2) befindet, auf der Grundlage des Gierfehler-Befehlswertes geändert wird.

3. Windpark (1) nach Anspruch 2, wobei ein relativer Azimut und ein Abstand zwischen den mehreren Windkraftgeneratoren (2) als die relative Position des Windkraftgenerators (2a) verwendet werden, der sich in Bezug auf den Windkraftgenerator (2) in der Nähe auf der windzugewandten Seite der mehreren Windkraftgeneratoren (2) befindet.

4. Windpark (1) nach einem der vorhergehenden Ansprüche, wobei ein Einstell-Winkel des Windkraftgenerators (2a), der sich auf der windzugewandten Seite der mehreren Windkraftgeneratoren (2) befindet, als Mittel zum Umschalten in die degradierte Betriebsart gesteuert wird.

5. Windpark (1) nach einem der vorhergehenden Ansprüche, wobei das Drehmoment des Windkraftgenerators (2a), der sich auf der windzugewandten Seite der mehreren Windkraftgeneratoren (2) befindet, als Mittel zum Umschalten in die degradierten Betriebsart gesteuert wird.

6. Windpark (1) nach einem der vorhergehenden Ansprüche, wobei der Windkraftgenerator (2a) auf der windzugewandten Seite in der degradierten Betriebsart kontinuierlich einen Gierfehler (55) ändert und einen Gierfehler-Befehlswert zum Setzen des Gierfehlers (55) auf 0 bei einer Windrichtung (53) berechnet, die mit einem relativen Azimut des Windkraftgenerators (2b, 2c) auf der windabgewandten Seite übereinstimmt.

7. Windpark (1) nach einem der vorhergehenden Ansprüche, wobei die Giersteuerung als Mittel zum Umschalten zwischen den drei Betriebsarten verwendet wird.

## Revendications

1. Parc éolien (1) comprenant une pluralité de générateurs éoliens (2), la pluralité de générateurs éoliens (2) incluant chacun :
un rotor (24) qui tourne en recevant au moins du vent ;
un contrôleur (33) d'angle de lacet qui commande une orientation d'un plan de rotation du rotor (24) ; et
un dispositif (31) de commutation de mode qui commute un mode de fonctionnement d'un générateur éolien (2),
dans lequel le mode de fonctionnement du générateur éolien (2a) situé sur un côté au vent parmi la pluralité de générateurs éoliens (2) est changé pour chaque direction de vent (53),
dans lequel le dispositif (31) de commutation de mode a une unité (315) de détermination de mode qui est adaptée à sélectionner le mode de fonctionnement du générateur éolien (2a) sur le côté au vent parmi trois modes incluant un mode de fonctionnement normal dans lequel l'influence de l'écoulement d'air n'est pas prise en compte et un mode de commande d'écoulement d'air dans lequel l'écoulement d'air ne pénètre pas dans le générateur éolien (2b, 2c) sur le côté sous le vent,
**caractérisé en ce que** l'unité (315) de détermination de mode est adaptée à sélectionner, comme le troisième mode de fonctionnement du générateur éolien (2a) sur le côté au vent, un mode de fonctionnement dégradé dans lequel le fonctionnement du générateur éolien (2a) est dégradé de façon à limiter l'influence de l'écoulement d'air, sur la base d'une information d'erreur de lacet nécessitée par le générateur éolien (2a) sur le côté au vent.

2. Parc éolien (1) selon la revendication 1, dans lequel une valeur de commande d'erreur de lacet pour chacune des directions de vent (53) est calculée à partir d'une position relative par rapport à un générateur éolien (2) à proximité, et le mode de fonctionnement du générateur éolien (2a) situé sur le côté au vent parmi la pluralité de générateurs éoliens (2) est changé, sur la base de la valeur de commande d'erreur de lacet.

3. Parc éolien (1) selon la revendication 2, dans lequel un azimut relatif et une distance entre la pluralité de générateurs éoliens (2) sont utilisés, comme la position relative du générateur éolien (2a) situé sur le côté au vent parmi la pluralité de générateurs éoliens (2) par rapport au générateur éolien (2) à proximité.

4. Parc éolien (1) selon une quelconque revendication précédente, dans lequel un angle de calage du générateur éolien (2a) situé sur le côté au vent parmi la pluralité de générateurs éoliens (2) est commandé comme un moyen pour commuter sur le mode de fonctionnement dégradé.

5. Parc éolien (1) selon une quelconque revendication précédente, dans lequel un couple du générateur éolien (2a) situé sur le côté au vent parmi la pluralité de générateurs éoliens (2) est commandé comme un moyen pour commuter sur le mode de fonctionnement dégradé.

6. Parc éolien (1) selon une quelconque revendication précédente, dans lequel, dans le mode de fonctionnement dégradé, le générateur éolien (2a) sur le côté au vent change en continu une erreur (55) de lacet, et calcule une valeur de commande d'erreur de lacet pour fixer l'erreur (55) de lacet à 0 à une direction de vent (53) qui correspond à un azimut relatif du générateur éolien (2b, 2c) sur le côté sous le vent.

7. Parc éolien (1) selon une quelconque revendication précédente, dans lequel une commande de lacet est utilisée comme un moyen pour commuter parmi les trois modes de fonctionnement.
